# EUROPEAN PATENT SPECIFICATION

(11) **EP 1 749 463 B1**
(45) Date of publication and mention of the grant of the patent: **31.12.2008**
(21) Application number: 06015964.7
(22) Date of filing: 01.08.2006
(51) Int. Cl.: A47J 31/06, A47J 31/46

(54) **Brewing apparatus for preparing foam, froth, or crema under low pressure**
Brühvorrichtung zur Herstellung von Schaum unter Niederdruck
Dispositif d'infusion pour préparer de la mousse à basse pression

(30) Priority: 02.08.2005 US 195843; 22.12.2005 US 317999
(43) Date of publication of application: 07.02.2007
(73) Proprietor: Electrical and Electronics Limited, Tai Po, N.T. Hong Kong (CN)
(72) Inventor: Chen, Yee Mau, 53 Ting Kok Road Tai Po, N.T. (HK); Wong, Raymond Wai Ming, 53 Ting Kok Road Tai Po, N.T. (HK)
(74) Representative: Capasso, Olga

(56) References cited:
- EP-A- 1 319 357
- EP-A- 1 498 059
- EP-A- 1 563 774
- WO-A-00/07488
- WO-A-20/04100739
- WO-A-20/05058109
- US-A1- 2005 076 783

## Description

### BACKGROUND OF THE INVENTION

Coffee beverages having a thick, foamy layer called "crema" are becoming increasingly popular among coffee drinkers and aficionados. Resembling the head that one might find in a glass of stout, crema is full of rich aroma and leaves a lingering flavor.

Typically, coffee beverages, such as espresso, which are brewed under high pressure (15-19 bar) will have a layer of crema. The crema traps the fine aromatics and the light gaseous flavors of the coffee which can be quite pleasing to the palate. Like a blanket, the crema retains the pleasant aromas and flavors which would otherwise quickly escape from the coffee beverage.

Those of ordinary skill in the art currently use high-pressure brewing methods and apparatuses to prepare coffee beverages with the desired layer of foam, froth, or crema. It is widely-accepted by those in the art that good bar pressure is essential for making good crema. A pressure of 15-19 bar is considered the optimum range, although some skilled in the art claim 9-11 bar is sufficient if the coffee beans have been ground correctly. Unfortunately, it thus follows that regular coffee, which is currently brewed by conventional methods and apparatuses without high pressure, lacks the desired layer of crema. The patent application EP 1 563 774 discloses a brewing filter apparatus comprising a mesh cover, a coarse filter, a fine filter, a large O-ring, a coffee container, a foam maker wherein the mesh cover, the filters and large O-ring are affixed from above, the foam maker is affixed from below. Such device is simple and easy to use or clean and produces only a small bubble foam layer. In response to this unmet need for a low-pressure solution, Applicants hereby disclose the present invention which relates to a brewing apparatus capable of preparing foam, froth, or crema, particularly for coffee beverages, using low pressures.

### SUMMARY OF THE INVENTION

The present invention pertains to a brewing filter apparatus capable of preparing foam, froth, or crema, particularly for coffee beverages, under low pressure. The apparatus of the present invention can operate at pressures below 15 bar and as low as 1-3 bar.

It is an object of the invention a brewing filter apparatus comprising a mesh cover, coarse filter, fine filter, large O-ring, coffee container, small O-ring, and a foam maker having a plurality of holes, and a mesh or a stainless steel wire mesh situated in the center of the foam maker, facing the plurality of holes, whereby said mesh cover, coarse filter, fine filter, and large O-ring are affixed to said coffee container from above, said small O-ring and foam maker are affixed to said coffee container from below, and the affixation of said foam maker and coffee container is sealed by said small O-ring.

Use of the mesh cover is particularly beneficial in retaining ground coffee on the coarse filter but is merely optional when using coffee pods.

Preferably the mesh cover is affixed to the coffee container by a turn-to-lock arrangement.

Preferably the coarse filter is made of a suitable metal or stainless steel metal.

Preferably the coffee container is made of suitable plastic or steel or the large and small O-rings are made of an elastomer, more preferably the elastomer is silicone rubber.

Alternatively the foam maker is affixed to the coffee container by screw fit spot welding, or bayonet fit whereby the exterior of said foam maker comprises threads and the exterior of said coffee container comprises an orifice with corresponding grooves for receiving said threads. Alternatively the exterior of said coffee maker comprises an orifice and the exterior of said foam maker comprises a recess for receiving said orifice.

In a particular aspect the foam maker is made of suitable metal or plastic or a brass metal or a glass-filled nylon plastic.

In a particular aspect the foam maker comprises two holes or two holes which directly oppose each other.

In a particular aspect the diameter of the holes of the foam maker ranges from 0.3 to 1 mm. facing the plurality of holes. Preferably the mesh has in the range of 50 to 100 eyes per cm².

It is another object of the invention a method of preparing foam, froth, or crema, comprising using the brewing filter apparatus of the invention at a pressure less than 15 bar or, preferably, at a pressure in the range of 1-3 bar

In a preferred embodiment, the mesh cover and coffee container are made of plastic, preferably polyoxymethylene (POM); the coarse filter is made of stainless steel; the fine filter is made of nylon; and the large and small O-rings are made of silicone rubber. The apparatus is designed to be used in conjunction with a general brew head assembly, such as a single-serve coffee machine.

In a preferred embodiment, the foam maker comprises two small holes which directly oppose each other and have a diameter in the range of 0.3 to 1 mm, such that when coffee is being brewed, two small opposing jets of coffee liquid will race inward and turbulently contact each other inside the foam maker. To further facilitate the formation of crema, a stainless steel wire mesh is placed inside the foam maker between the two jets of coffee liquid to increase the contact area and agitation. As a result of the agitation and turbulence, the contacted coffee liquid forms a layer of fine bubbles known as crema.

### DESCRIPTION OF THE FIGURES

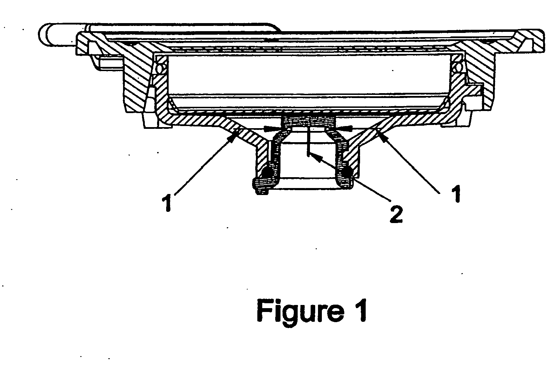

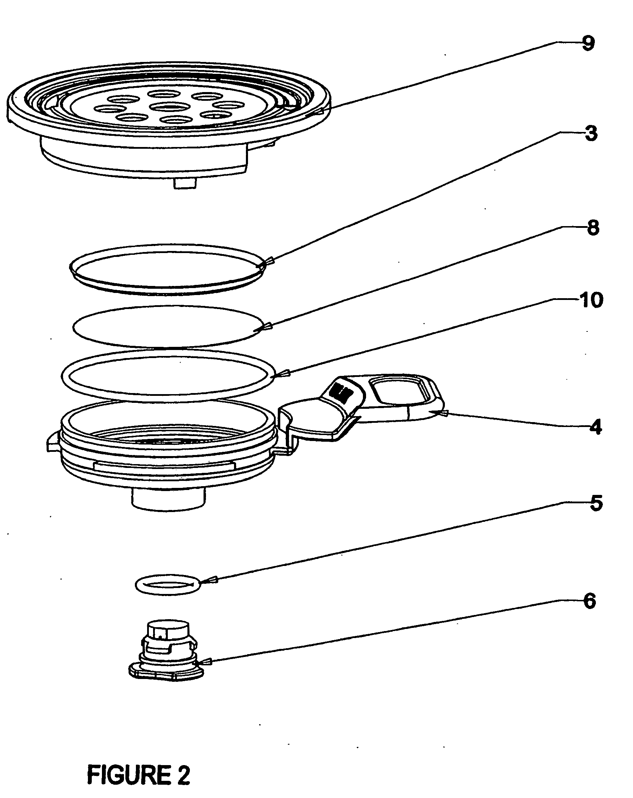

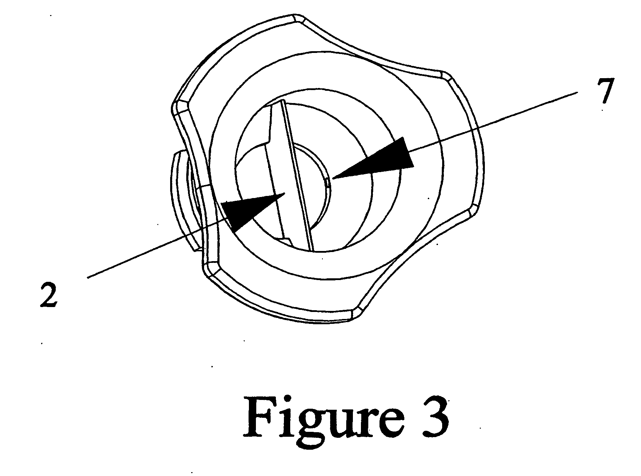

The present invention relates to a brewing apparatus capable of preparing foam, froth, or crema, especially for crema coffee, under low pressure. The present invention is shown in Figures 1 to 3.

**Figure 1** is a cross-sectional illustration of the brewing filter apparatus with arrows **1** showing the direction of the coffee flow/jet into the apparatus when preparing crema. In addition, a stainless steel wire mesh **2** is situated in the center between the coffee jets.

**Figure 2** is an exploded view of the brewing filter apparatus.

**Figure 3** is an isometric view of the foam maker showing one of the two opposing holes **7** for the coffee jets and a stainless steel wire mesh **2** situated in the center, separating the two opposing holes.

### DETAILED DESCRIPTION OF THE INVENTION

The present invention pertains to a brewing filter apparatus capable of preparing foam, froth, or crema, particularly for coffee beverages, under low pressure. While the current state of the art considers 15-19 bar pressure to be the optimum range for the formation of crema, the present invention is capable of preparing crema at pressures below 15 bar and as low as 1-3 bar.

The apparatus of the present invention comprises a mesh cover **9,** coarse filter **3,** fine filter **8,** large O-ring **10,** coffee container **4,** small O-ring **5,** and a foam maker **6** having a plurality of holes. In a preferred embodiment, the mesh cover **9** and coffee container **4** are made of plastic, such as polyoxymethylene (POM), the coarse filter **3** is made of metal, such as stainless steel, the fine filter **8** is made of nylon, and the large and small O-rings are made of an elastomer, such as silicone rubber.

The mesh cover **9** has a plurality of holes on its top surface and has a mesh, preferably a metal such as stainless steel, affixed to the underside of its top surface. Where the mesh cover **9** is plastic and the mesh is metal, the mesh cover **9** can be molded so as to secure the metal mesh to its underside. In another embodiment, plurality of holes on the top surface of the mesh cover **9** can be made of a sufficiently small size (but larger in number) so as to render it unnecessary to affix a mesh to its underside. The coarse filter **3** is not a mesh (in this particular embodiment) but instead more resembles a rigid sheet having a plurality of holes (about 300 in this particular embodiment) punched through its surface. The fine filter **8** is a mesh having about 80 to 140 eyes per cm². These parts may be assembled together after individual molding or other appropriate method of construction. The brewing filter apparatus is designed to be used in conjunction with a coffee or beverage-making machine.

The mesh cover **9** is affixed to the coffee container **4** by a turn-to-lock arrangement, whereby the mesh cover **9** and coffee container **4** have corresponding threads/grooves such that a clockwise/counterclockwise turn will engage/release (or vice versa) the mesh cover. The coarse filter **3,** fine filter **8,** and large O-ring **10** are situated between the mesh cover **9** and coffee container **4** so as to keep the coffee grounds away from the foam maker **6,** particularly when ground coffee as opposed to coffee pods are used in the machine. The foam maker **6** is responsible for facilitating the formation of crema.

The coffee container **4** of the brewing filter apparatus is designed to be used in obtaining and/or measuring the required amount of coffee grounds or coffee pods needed for making the desired amount of brewed coffee. The coffee container **4** may be constructed of a suitable material that is FDA approved and capable of tolerating hot water temperatures of approximately 100 degrees Celsius. The material may be metal (e.g., stainless steel) or plastic (e.g., polypropylene, POM). Polyoxymethylene (POM) is a particularly suitable replacement for metal due to its stiffness, dimensional stability, and corrosion resistance.

The coffee container **4** also has a handle so that the user can hold the brewing filter apparatus. Preferably, the handle should be constructed of a sturdy, insulating material so as to protect the user from the heat of the coffee container. To serve its intended purpose, the handle may be constructed of a suitable material such as polypropylene plastic. In a preferred embodiment, the entire coffee container **4** is made of plastic (e.g., polypropylene, POM) such that the handle and container are of one construction.

The foam maker **6** is affixed to the coffee container **4** from below and may be affixed to the coffee container **4** by a screw fit, whereby the exterior of said foam maker comprises threads and said coffee container comprises an orifice with corresponding grooves for receiving said threads. The foam maker **6** may also be affixed to the coffee container **4** by spot welding or by bayonet fit in which the foam maker **6** is inserted into the larger hollow cavity on the underside of the coffee container **4** whereby the exterior of said coffee maker comprises an orifice and the exterior of said foam maker comprises a recess to receive said orifice. The foam maker **6** may be constructed of a suitable material such as plastic, metal, or a combination thereof. In one embodiment, the plastic is polypropylene and the metal is stainless steel. In a preferred embodiment, the plastic is glass-filled nylon and the metal is brass. The small O-ring **5** is placed between the foam maker **6** and the coffee container **4** so as to form a water- and air-tight seal.

In a preferred embodiment, the foam maker **6** has two opposing holes **7** extending from its exterior to its interior. The size of the holes ranges from 0.3 to 1 mm in diameter. During operation, the holes allow a horizontal jet of coffee to race into the interior of the foam maker, thereby turbulently contacting the other opposing jet of coffee and creating foam, froth, or crema. To facilitate agitation of the coffee and thus the formation of crema, a mesh **2**, preferably made of stainless steel wire, is situated in the center of the foam maker **6** directly in the path of and in between the opposing jets of coffee. Preferably, the mesh has in the range of 50 to 100 eyes per cm². The mesh provides a larger surface area for the contacting of the opposing coffee jets, resulting in greater turbulence of the coffee and the formation of more crema.

The operation of this apparatus is relatively easy and straightforward. The brewing filter apparatus may be adapted or modified for use on various single-serve coffee machines. First, the user need just place the coffee grounds or coffee pod onto the coarse filter **3** which is situated above the coffee container **4.** A mesh cover **9,** discussed supra, should be employed when using coffee grounds to retain the coffee grounds on the coarse filter **3,** but is optional when using coffee pods. The brewing filter apparatus may then be inserted into a coffee-making machine and secured. The present invention is now ready for brewing crema coffee. During operation, the crema coffee or other brewed beverage will then flow from the brewing filter apparatus to the spout of the coffee maker and then to the user's cup.

Although, the preferred embodiment of the present invention is directed to making crema coffee, it should be understood that the brewing filter apparatus can be used to brew beverages and concoctions including, but not limited to, tea, liquid extracts, and the like.

## Claims

1. A brewing filter apparatus comprising a mesh cover (9), a coarse filter (3), a fine filter (8), a large O-ring(10), a coffee container (4), a small O-ring(5), and a foam maker (6) having a plurality of holes (7), whereby said mesh cover (9), said coarse filter (3), said fine filter (8), and said large O-ring (10) are affixed to said coffee container (4) from above, said small O-ring(5) and foam maker (6) are affixed to said coffee container (4) from below, **characterized in that** the affixation of said foam maker (6) to said coffee container (4) is sealed by said small O-ring(5),and **in that** the foam maker (6) further comprises a mesh (2) or a stainless steel wire mesh (2) situated in the center of the foam maker (6), facing the plurality of holes (7).

2. The brewing filter apparatus of claim 1, wherein the mesh cover (9) is affixed to the coffee container (4) by a turn-to-lock arrangement.

3. The brewing filter apparatus of claim 1, wherein the coarse filter (3) is made of a suitable metal or a stainless steel metal.

4. The brewing filter apparatus of claim 1, wherein the coffee container (4) is made of suitable plastic or steel or the large O-ring (10) and small O-ring (5) are made of an elastomer.

5. The brewing filter apparatus of claim 4, wherein the elastomer is silicone rubber.

6. The brewing filter apparatus of claim 1, wherein the foam maker (6) is affixed to the coffee container (4) by screw fit, spot welding, or bayonet fit whereby the exterior of said coffee container (4) comprises an orifice and the exterior of said foam maker (6) comprises a recess for receiving said orifice.

7. The brewing filter apparatus of claim 1, wherein the foam maker (6) is affixed to the coffee container (4) by screw fit whereby the exterior of said foam maker (6) comprises threads and the exterior of said coffee container (4) comprises an orifice with corresponding grooves for receiving said threads.

8. The brewing filter apparatus of claim 1, wherein the foam maker (6) is made of suitable metal or plastic or a brass metal or a glass-filled nylon plastic.

9. The brewing filter apparatus according to claim 1, wherein the foam maker (6) comprises two holes or two holes which directly oppose each other.

10. The brewing filter apparatus of claim 1, wherein the diameter of the holes (7) of the foam maker (6) ranges from 0.3 to 1 mm.

11. The brewing filter apparatus of claim 1, wherein the mesh (2) has in the range of 50 to 100 eyes per cm².

12. A method of preparing foam, froth, or crema, comprising using the brewing filter apparatus of claim 1 at a pressure less than 15 bars.

13. The method of claim 12 wherein the pressure is in the range of 1-3 bars.

## Patentansprüche

1. Brühfiltervorrichtung, umfassend eine Siebabdeckung (9), einen Grobfilter (3), einen Feinfilter (8), einen großen O-Ring (10), einen Kaffeebehälter (4), einen kleinen O-Ring (5) und einen Schaumbereiter (6) mit mehreren Löchern (7), wobei die Siebabdeckung (9), der Grobfilter (3), der Feinfilter (8) und der O-Ring (10) von oben an dem Kaffeebehälter (4) befestigt sind, der kleine O-Ring (5) und der Schaumbereiter (6) von unten an dem Kaffeebehälter (4) befestigt sind, **dadurch gekennzeichnet, dass** die Befestigung des Schaumbereiters (6) an dem Kaffeebehälter (4) durch den kleinen O-Ring (5) abgedichtet wird und **dadurch**, dass der Schaumbereiter (6) ferner ein Sieb (2) oder ein Edelstahlsieb (2) umfasst, das in der Mitte des Schaumbereiters (6) den mehreren Löchern (7) gegenüberliegend angeordnet ist.

2. Brühfiltervorrichtung nach Anspruch 1, wobei die Siebabdeckung (9) an dem Kaffeebehälter (4) befestigt wird, indem sie gedreht wird, bis sie einrastet.

3. Brühfiltervorrichtung nach Anspruch 1, wobei der Grobfilter (3) aus einem geeigneten Metall oder einem Edelstahl hergestellt ist.

4. Brühfiltervorrichtung nach Anspruch 1, wobei der Kaffeebehälter (4) aus einem geeigneten Kunststoff oder Stahl oder der große O-Ring (10) und der kleine O-Ring (5) aus einem Elastomer hergestellt sind.

5. Brühfiltervorrichtung nach Anspruch 4, wobei das Elastomer ein Silikongummi ist.

6. Brühfiltervorrichtung nach Anspruch 1, wobei der Schaumbereiter (6) an dem Kaffeebehälter (4) durch Verschrauben, Punktschweißen oder mit einem Bajonett-Verschluss befestigt wird, wobei die Außenseite des Kaffeebehälters (4) eine Öffnung umfasst und die Außenseite des Schaumbereiters (6) eine Vertiefung zur Aufnahme der Öffnung umfasst.

7. Brühfiltervorrichtung nach Anspruch 1, wobei der Schaumbereiter (6) mittels einer Schraube an dem Kaffeebehälter (4) befestigt ist, wobei die Außenseite des Schaumbereiters (6) Gewinde umfasst und die Außenseite des Kaffeebehälters (4) eine Öffnung mit entsprechenden Nuten zur Aufnahme der Gewinde umfasst.

8. Brühfiltervorrichtung nach Anspruch 1, wobei der Schaumbereiter (6) aus einem geeigneten Metall oder Kunststoff oder aus Messing oder aus glasfaserverstärktem Nylon hergestellt ist.

9. Brühfiltervorrichtung nach Anspruch 1, wobei der Schaumbereiter (6) zwei Löcher oder zwei direkt einander gegenüberliegende Löcher umfasst.

10. Brühfiltervorrichtung nach Anspruch 1, wobei der Durchmesser der Löcher (7) des Schaumbereiters (6) zwischen 0,3 und 1 mm groß ist.

11. Brühfiltervorrichtung nach Anspruch 1, wobei das Sieb (2) eine Maschenanzahl von 50 bis 100 pro cm² aufweist.

12. Verfahren zum Bereiten von Schaum oder Crema, das die Anwendung der Brühfiltervorrichtung nach Anspruch 1 bei einem Druck von maximal 15 bar umfasst.

13. Verfahren nach Anspruch 12, wobei der Druck zwischen 1 und 3 bar misst.

## Revendications

1. Appareil de filtration de brasserie comportant un capot maillé (9), un filtre grossier (3), un filtre fin (8), un gros joint torique (10), un récipient à café (4), un petit joint torique (5) et un générateur de mousse (6) comportant une pluralité de trous (7), ledit capot maillé (9), ledit filtre grossier (3), ledit filtre fin (8) et ledit gros joint torique (10) étant fixés par le dessus audit récipient à café (4), ledit petit joint torique (5) et ledit générateur de mousse (6) étant fixés par le dessous audit récipient à café (4), **caractérisé en ce que** la fixation dudit générateur de mousse (6) audit récipient à café (4) est scellée par ledit petit joint torique (5) et **en ce que** ledit générateur de mousse (6) comprend en outre un maillage (2) ou un maillage en fil métallique inoxydable (2) placé au centre du générateur de mousse (6) et faisant face à la pluralité de trous (7).

2. Appareil de filtration de brasserie selon la revendication 1, dans lequel le capot maillé (9) est fixé au récipient à café (4) par un système de verrouillage rotatif.

3. Appareil de filtration de brasserie selon la revendication 1, dans lequel le filtre grossier (3) est composé d'un métal approprié ou d'un métal inoxydable.

4. Appareil de filtration de brasserie selon la revendication 1, dans lequel le récipient à café (4) est composé de plastique ou d'acier approprié ou le gros joint torique (10) et le petit joint torique (5) sont composés d'élastomère.

5. Appareil de filtration de brasserie selon la revendication 4, dans lequel l'élastomère est du caoutchouc silicone.

6. Appareil de filtration de brasserie selon la revendication 1, dans lequel le générateur de mousse (6) est fixé au récipient à café (4) par vissage, soudage par point ou ajustage à baïonnette, l'extérieur dudit récipient à café (4) comporte un orifice et l'extérieur dudit générateur de mousse (6) comporte un retrait destiné à recevoir ledit orifice.

7. Appareil de filtration de brasserie selon la revendication 1, dans lequel le générateur de mousse (6) est fixé au récipient à café (4) par vissage, soudage par point ou ajustage à baïonnette, l'extérieur dudit générateur de mousse (6) comporte des filetages et l'extérieur dudit récipient à café (4) comporte un orifice avec des rainures correspondantes destinées à recevoir lesdits filetages.

8. Appareil de filtration de brasserie selon la revendication 1, dans lequel le générateur de mousse (6) est composé d'un métal ou plastique approprié ou d'un métal à base de laiton ou de plastique nylon chargé de verre.

9. Appareil de filtration de brasserie selon la revendication 1, dans lequel le générateur de mousse (6) comporte deux trous ou deux trous opposés directement l'un à l'autre.

10. Appareil de filtration de brasserie selon la revendication 1, dans lequel le diamètre des trous (7) du générateur de mousse (6) va de 0,3 à 1 mm.

11. Appareil de filtration de brasserie selon la revendication 1, dans lequel le maillage (2) se situe dans la plage de 50 à 100 oeillets par cm².

12. Procédé de préparation de mousse, écume, crème, comportant l'utilisation du filtre de brasserie selon la revendication 1 à une pression inférieure à 15 bars.

13. Procédé selon la revendication 12, dans lequel la pression se situe dans la plage de 1 à 3 bars.
